# EUROPEAN PATENT APPLICATION

(11) **EP 1 151 818 A1**
(43) Date of publication of application: **07.11.2001**
(21) Application number: 01201574.9
(22) Date of filing: 01.05.2001
(51) Int. Cl.: B23B 13/08, B23B 13/12

(54) **Bar guide members for bar loaders in automatic lathes**

(30) Priority: 05.05.2000 IT MI000270 U
(71) Applicant: PIETRO CUCCHI S.p.A., 20060 Bussero (Milano) (IT)
(72) Inventor: Cucchi, Pietro, 20060 Bussero (Milano) (IT)
(74) Representative: Faraggiana, Vittorio, Dr. Ing.

(57) **Abstract**

A member for the formation of bar guides in automatic bar feeders for lathes comprises a cradle (11) shaped generally like the letter C and designed to face on a corresponding cradle of an analogous member to form the bar containment channel. At least one arm (12) designed to support the member in the automatic feeder projects from the cradle (11) laterally. The arm (12) is connected to said cradle (11) by means of projections or bars (15,16) directed virtually parallel to the cradle axis.

## Description

The present invention relates to a member suitable for forming a bar guide for support and sliding of a bar in an automatic loader for automatic lathes.

In the prior art of automatic loaders for lathes the problem of adequately supporting the rapidly rotating bars and minimizing the vibrations and noise of operation and limiting wear is well known. The problem is still more evident with faceted bars, for example with hexagonal cross section.

Guides made up of a large number of small C-shaped segments paired and facing two by two to make up the channel in which the bar and its pusher have been proposed. Each C segment has its side arm permitting elastic support. Usually the elastic support is provided by the side arm's own flexibility as it is made with an appropriate shape. A serious limit on this structure is in bending behavior. Indeed, the elastic deformation of the segments subject to radial stress varies greatly as a function of load direction. This prevents optimal vibration damping. In addition, the non-isotropic behavior of the segments increases the risk of the bar's escape, especially if it has a small diameter. For example, when the segments are placed horizontally and loaded vertically, their containing cradle arches outward, favoring escape of the smaller diameter bars.

The general purpose of the present invention is to remedy the above mentioned shortcomings by making available a member for the formation of bar guides with segments having improved supporting characteristics with better assurance of containment and more effective vibration damping.

In view of this purpose it was sought to provide in accordance with the present invention a member for the formation of bar guides in automatic bar feeders for lathes comprising a cradle shaped generally like the letter C and designed to face on a corresponding cradle of an analogous member to form the bar containment channel, there projecting from the cradle laterally at least one arm designed to support the member in the automatic feeder characterized in that said arm is connected to said cradle through projections directed basically in the direction of the axial extension of the cradle.

To clarify the explanation of the innovative principles of the present invention and its advantages compared with the prior art there is described below with the aid of the annexed drawings a possible embodiment thereof by way of non-limiting example applying said principles. In the drawings:
- FIG 1 shows a perspective view of two members made in accordance with the present invention,
- FIG 2 shows a cross section view along plane of cut II-II of FIG 1 of a member in accordance with the present invention,
- FIG 3 shows a cross section view along plane of cut III-III of FIG 1 of a member in accordance with the present invention, and
- FIG 4 shows a cross section view along plane of cut IV-IV of FIG 1 of a member in accordance with the present invention.

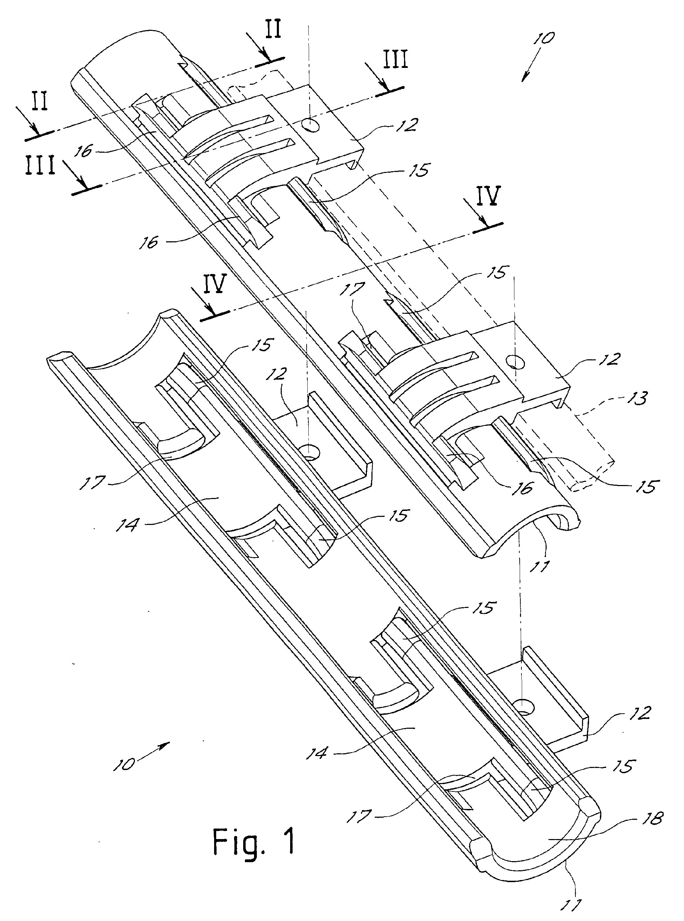

With reference to the figures FIG 1 shows a pair of members or segments designated as a whole by reference number 10 and designed to mate to define between them a channel for running of a bar in a bar guide of an automatic loader for lathes. To form the entire channel the segments 10 are also aligned with a plurality of similar segments until they define a desired channel length.

Each segment 10 comprises a cradle zone 11 formed generally like the letter C for reception of the bar. From the cradle zone extend laterally two arms 12 for connection of the segments to a support and handling mechanism 13 (shown in broken lines for the upper segment) normally found in the loader and therefore not further shown nor described. This mechanism 13 provides for example the normal closing and opening movement of the segments to allow loading of a bar between them and expulsion of the bar residue at the end of machining.

While the prior art segments are usually very short (a few centimeters at the most) and have a single support arm the segments in accordance with the present invention have advantageously a relatively high length between 200mm and 300mm and in particular on the order of 240mm and at least one pair of support arms.

In accordance with the invention principles the support arm does not engage directly in the wall of the cradle 11 but is formed with a leading end 14 from which project laterally bars or projections 15, 16 which extend in the direction of the axial extension of the cradle to engage in the cradle wall. This provides an elastic support for the cradle which is not entrusted only to the flexibility of the arm 12. The arm can be provided basically rigid.

Since the connection between the cradle and the arm takes place through bars parallel with the cradle axis and arranged symmetrically along the transversal extension of the cradle the behavior of the supporting segment has been found to be basically isotropic.

Seen from above, the end 14 of the arm thus takes on the form of the letter H. Advantageously this H form is received in a complementary recess 17 made in the cradle wall. Again advantageously, as is seen well in FIG 1 in particular, the bars identified by the projections 15, 16 can extend for a rectilinear central section to then bend and join with the cradle.

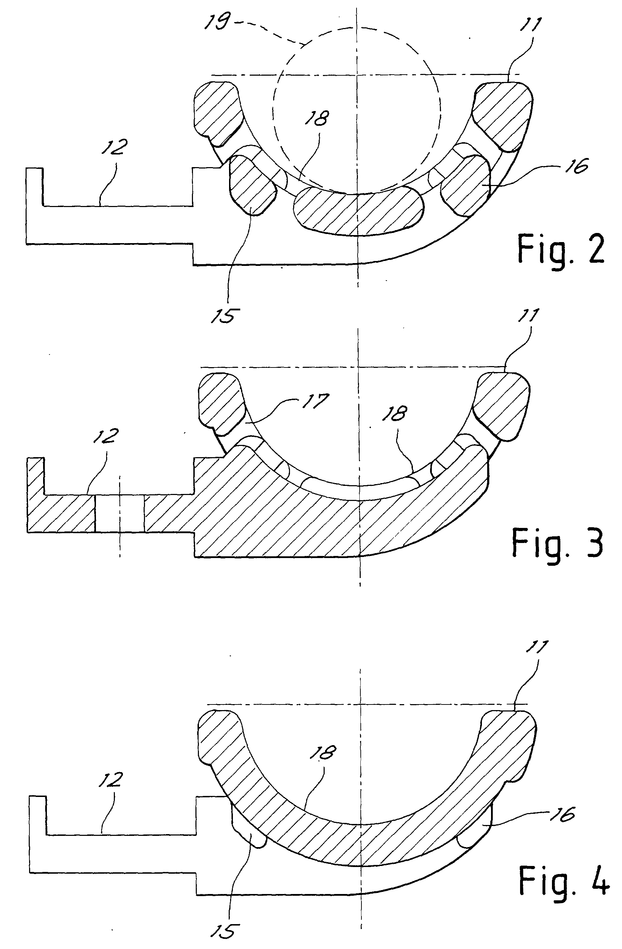

The projections 15, 16 thus provide leaf spring suspension. As may be seen in the cross sections of FIGS 2 and 3 both the head end of the arms 12 and the side projections 15, 16 are recessed in relation to the bar supporting plane made up of the internal surface 18 of the cradle. This way a bar 19 received in the cradle (for example as shown diagrammatically in broken lines in FIG 2) will not touch the H part of the elastic support of the cradle so as to not affect its elastic behavior.

The entire member 10 can be made in a single piece by injection molding of suitable plastic material, for example 'HYTREL® ' resin manufactured by DUPONT.

It is now clear that the predetermined purposes have been achieved by making available a bar guide member having a simple structure and isotropic behavior, i.e. constant deformation proportionate to the radial load and in the same direction as the load. In addition to excellent vibration absorption there is considerable reduction of operating noise with the above described member.

Naturally the above description of an embodiment applying the innovative principles of the present invention is given by way of non-limiting example of said principles within the scope of the exclusive right claimed here. For example in the member in accordance with the present invention there can be incorporated known metal inserts to increase wear resistance. In addition, with different sizing the number of arms can be reduced to one or increased.

## Claims

1. Member for the formation of bar guides in automatic bar feeders for lathes comprising a cradle (11) shaped generally like the letter C and designed to face on a corresponding cradle of an analogous member to form the bar containment channel with there projecting laterally from the cradle (11) at least one arm (12) designed to support the member in the automatic feeder **characterized in that** said arm (12) is connected to said cradle (11) through projections (15,16) directed basically in the direction of the axial extension of the cradle.

2. Member in accordance with claim 1 **characterized in that** the projections (15,16) are two for each side of the arm (12) and arranged virtually in a symmetrical position with respect to the transverse extension of the cradle (11).

3. Member in accordance with claim 2 **characterized in that** the projections (15,16) identify bars extending for a rectilinear central section and having curved ends to joint with the cradle wall.

4. Member in accordance with claim 2 **characterized in that** the projections (15,16) and a leading end (14) of said arm (12) from which they project virtually form a letter H.

5. Member in accordance with claim 4 **characterized in that** the letter H is received in a complementary recess (17) in the cradle wall.

6. Member in accordance with claim 5 **characterized in that** said letter H is recessed with respected to the inner surface (18) of the cradle so as not to interfere with bars received in the cradle.

7. Member in accordance with claim 1 **characterized in that** there are two arms.

8. Member in accordance with claim 1 **characterized in that** the length of the cradle is between 200mm and 300mm and in particular on the order of 240mm.
